# EUROPEAN PATENT SPECIFICATION

(11) **EP 3 423 629 B1**
(45) Date of publication and mention of the grant of the patent: **02.12.2020**
(21) Application number: 17709193.1
(22) Date of filing: 22.02.2017
(51) Int. Cl.: D21H 11/18, D21J 3/00

(54) **METHOD OF MANUFACTURING 3D SHAPED ARTICLES**
VERFAHREN ZUR HERSTELLUNG VON 3D-FORMKÖRPERN
PROCÉDÉ DE FABRICATION D'ARTICLES DE FORME TRIDIMENSIONNELLE

(30) Priority: 29.02.2016 SE 1650262
(43) Date of publication of application: 09.01.2019
(73) Proprietor: Stora Enso Oyj, 00101 Helsinki (FI)
(72) Inventor: AXRUP, Lars, 663 41 Hammarö (SE); GULLANDER, Kristina, 652 21 Karlstad (SE)
(74) Representative: Steinrud, Henrik
(86) International application number: PCT/IB2017/050989
(87) International publication number: WO 2017/149408

(56) References cited:
- WO-A1-2004/055268
- WO-A1-2009/014483
- WO-A1-2014/072886
- WO-A1-2014/080084
- WO-A1-2014/147295

## Description

### Technical Field

The present invention relates to a method of manufacturing a 3D shaped article from cellulose fiber based material.

### Background

Three-dimensional (3D) shaped packages including various shapes, such dimples included in inserts for chocolate boxes, holding the chocolate pieces, or deep trays, are usually made from plastic materials or from paperboard molded to the desired shape. However, paperboard is not as flexible as plastic and problems with creases oftentimes occur during molding.

Other examples of 3D shaped packages made from cellulose fiber based materials are molded pulp packages, such as egg cartons. Egg cartons are usually made from pulp of recycled paper In the production of molded pulp packages, formation molds descend in a vat filled with pulp. A Vacuum sucks the pulp mixture onto the formation molds. The formation molds contain a stainless steel mesh, which ensures an even vacuum through the mold so that the pulp is spread evenly. However, molded pulp packages produced in such a way have a very rough surface which is not suitable for printing.

In recent years, the potential of using highly fibrillated cellulose, such as microfibrillated pulp (MFC) or nanocellulose in paper and paperboard production to enhance strength or provide barrier functionality has been observed by the industry. In paper or paperboard applications such highly fibrillated cellulose has been used as an additive to be added e.g. in the wet-end, or applied in the coating or surface sizing of the paper or paperboard.

WO2004055268 describes a method to form molded cellulosic articles by drying and optionally pressing a fiber suspension comprising cellulose enzyme-treated MFC in casting molds to obtain the articles. The patent application exemplifies a tray made of e-MFC that was prepared in a Finnish Hand Sheet Former and then press dried to the desired shape. Thus, in this method an MFC sheet is pressed into the desired shape, whereby cracks and wrinkles might occur.

There thus remains a need for a method to manufacture 3D shaped articles with smooth, crease-free surfaces, from cellulose based material.

### Summary of the invention

The object of the present invention is to provide a method to enable manufacturing of 3D shaped articles that fulfills the above identified needs. Thus, it is an object of the present invention to provide an energy efficient method to manufacture 3D shaped articles from cellulose-based material without the problems with roughness and creases connected with the prior art solutions.

According to the invention the object above is attained by a method of manufacturing a 3D shaped article from cellulose fiber based materials according to the attached patent claims. The method of the invention comprises the steps of:
- providing a suspension with a dry content of more than 10%, which suspension comprises at least 95w% of cellulose fibers calculated on the total amount of dry material, whereof at least 50w% of said cellulose fibers have a fiber length of less than 1 mm and are nanofibrillated polysaccharide,
- spraying, in at least a first and a second spraying step, said suspension on a 3D-shaped, heated mold, which mold is held at a temperature of between 100 - 200 °C during the spraying operation and which mold has a smooth surface, whereby a 3D shaped article of cellulose fiber based material is formed,
- drying said 3D shaped article,
   the method further comprising a step of drying the formed article in-between said first and second spraying step

The method of the invention provides a 3D article with a smooth, crease free surface. Problems with creases and roughness in the surface of the article are efficiently avoided. The suspension comprising cellulose fibers can be applied at high concentrations, which render the method energy efficient and thus environmental friendly. The dry content of the suspension to be sprayed on the mold may be at least 15%, preferably between 15 - 30% or between 15 - 25%. The method further enables the manufacturer to have control of the application and of the thickness of the formed article.

The drying of the 3D shaped article is preferably accomplished by contactless drying, e.g. by use of hot air (generated e.g. by use of electricity, oil, bottled gas, burners or natural gas), Infrared heating (IR) or microwaves. Dewatering, e.g. by use of vacuum, is avoided whereby problems with roughening of the surface of the article is diminished. Thus, the drying is accomplished using drying methods excluding dewatering methods wherein water is removed from the surface of the formed article through the mold.

In one embodiment of the invention, the suspension may comprise at least 98w%, at least 99w%, or even 100w% cellulose fibers, calculated on the dry weight. The cellulose fibers may be nanofibrillated polysaccharide, such as microfibrillated cellulose (MFC). The suspension is preferably an aqueous suspension, but other solvents, such as alcohols or ketones, may also be used. In addition to the cellulose fibers, the suspension may optionally comprise small amounts of additives such as binders, pigments and/or dyes.

At least 50w% of the cellulose fibers in the suspension are constituted of fibers having a fiber length of less than 1mm. However, this proportion of short fibers (having a fiber length of less than 1mm) in the suspension may advantageously be higher than 50w%, e.g. at least 70w%, at least 80w% or even up to 100w% (calculated on the total dry weight of the suspension). The higher amount of short fibers, the greater affinity of the fibers to the mold surface and the smoother surface of the formed article is achieved.

In one preferred embodiment, the suspension comprising short fibers is sprayed onto a male-formed mold, whereby shrinkage of the article is avoided during drying. The outer surface of said male-formed mold, which surface is to be sprayed with the fiber solution, is smooth, having no apertures.

The suspension sprayed on the mold in at least a first and a second step, with in-between drying. This facilitates an even application and enhances the smoothness of the article even further. Moreover, the spraying of the suspension in several steps according to this embodiment render the use of suspensions with high concentrations of fibers possible which further improves the energy efficiency. The suspension may be sprayed on the mold in further steps, e.g. in three, four, 10 or even 30 steps, with in-between drying. The in-between drying may be accomplished by use of the same drying technologies as the final drying of the article, using contactless drying such as hot air, IR or microwaves. Preferably, the article formed in each spraying step is dried to a dry content of at least 50%, preferably to between 50-70%, prior to the subsequent spraying step. In each spraying step, a 3D-shaped fiber layer is formed on the mold with a grammage of e.g. 2-50 gsm, preferably around 5 -10 gsm. The grammage of the finally formed article may be e.g. around 300 gsm depending on the end-product targeted.

Further features, objects and advantages with the present invention are defined in the following detailed description of the invention.

### Detailed Description

The present invention relates to a method to manufacture a 3D shaped article from cellulose based material. The method enables 3D shaped articles to be produced from cellulose based material in an energy efficient and environmentally friendly way without the drawbacks connected to the prior art. The 3D articles produced by the invention are preferably 3D shaped packages or parts of packages e.g. trays, details for liquid packages, cosmetic packages, inserts for boxes comprising dimples such as inserts for chocolate, mobile phones or other products.

By the term "dry content" throughout the application it is meant content of dry matter in a slurry or solution. That is, for example 10% dry content means that the weight of the dry matter is 10%, based on the total weight of the solution or slurry. Analogously, by "dry weight" is meant the weight of dry matter.

By "smooth surface" is meant a continuous surface without any holes, depressions or protrusions.

By "fiber length" is meant the weighted average fiber length

By "fiber width" is meant the weighted average fiber width

The "nanofibrillated polysaccharide" may be any type of highly fibrillated fibers, such as microfibrillated cellulose (MFC), nanofibrillated cellulose, and cellulose fibrils or a mixture thereof. The definition of nanofibrillated polysaccharide includes bacterial cellulose or nanocellulose spun with either traditional spinning techniques or with electrostatic spinning. The fibers can also be formed by other means using e.g. ionic liquids or membrane techniques (precipitation or coagulation of dissolved cellulose) and thus either a form of regenerated cellulose or liberated fibrils obtained by selective dissolving liquids. Microfibrillated cellulose (MFC) shall in the context of the patent application mean a nano scale cellulose particle fiber or fibril with at least one dimension less than 100 nm. MFC comprises partly or totally fibrillated cellulose or lignocellulose fibers. The liberated fibrils have a diameter less than 100 nm, whereas the actual fibril diameter or particle size distribution and/or aspect ratio (length/width) depends on the source and the manufacturing methods. The smallest fibril is called elementary fibril and has a diameter of approximately 2-4 nm (see e.g. Chinga-Carrasco, G, Cellulose fibres, nanofibrils and microfibrils,: The morphological sequence of MFC components from a plant physiology and fibre technology point of view, Nanoscale research letters 2011, 6:417), while it is common that the aggregated form of the elementary fibrils, also defined as microfibril (Fengel, D., Ultrastructural behavior of cell wall polysaccharides, Tappi J., March 1970, Vol 53, No. 3.), is the main product that is obtained when making MFC e.g. by using an extended refining process or pressure-drop disintegration process. Depending on the source and the manufacturing process, the length of the fibrils can vary from around 1 to more than 10 micrometers A coarse MFC grade might contain a substantial fraction of fibrillated fibers, i.e. protruding fibrils from the tracheid (cellulose fiber), and with a certain amount of fibrils liberated from the tracheid (cellulose fiber).

There are different acronyms for MFC such as cellulose microfibrils, fibrillated cellulose, nanofibrillated cellulose, fibril aggregates, nanoscale cellulose fibrils, cellulose nanofibers, cellulose nanofibrils, cellulose microfibers, cellulose fibrils, microfibrillar cellulose, microfibril aggregrates and cellulose microfibril aggregates. MFC can also be characterized by various physical or physical-chemical properties such as large surface area or its ability to form a gel-like material at low solids (1-5 wt%) when dispersed in water. The cellulose fiber is preferably fibrillated to such an extent that the final specific surface area of the formed MFC is from about 1 to about 300 m2/g, or more preferably 50-200 m2/g when determined for a freeze-dried material with the BET method.

Various methods exist to make MFC, such as single or multiple pass refining, pre-hydrolysis followed by refining or high shear disintegration or liberation of fibrils. One or several pretreatment step is usually required in order to make MFC manufacturing both energy efficient and sustainable. The cellulose fibers of the pulp to be supplied may thus be pre-treated enzymatically or chemically, for example to hydrolyse or swell fiber or reduce the quantity of hemicellulose or lignin. The cellulose fibers may be chemically modified before fibrillation, wherein the cellulose molecules contain functional groups other (or more) than found in the original cellulose. Such groups include, among others, carboxymethyl (CMC), aldehyde and/or carboxyl groups (cellulose obtained by N-oxyl mediated oxydation, for example "TEMPO"), or quaternary ammonium (cationic cellulose). After being modified or oxidized in one of the above-described methods, it is easier to disintegrate the fibers into MFC or nanofibrillar size or NFC.

The nanofibrillar cellulose may contain some hemicelluloses; the amount is dependent on the plant source. Mechanical disintegration of the pre-treated fibers, e.g. hydrolysed, pre-swelled, or oxidized cellulose raw material is carried out with suitable equipment such as a refiner, grinder, homogenizer, colloider, friction grinder, ultrasound sonicator, single- or twin-screw extruder, fluidizer such as microfluidizer, macrofluidizer or fluidizer-type homogenizer. Depending on the MFC manufacturing method, the product might also contain fines, or nanocrystalline cellulose or e.g. other chemicals present in wood fibers or in papermaking process. The product might also contain various amounts of micron size fiber particles that have not been efficiently fibrillated.

MFC is produced from wood cellulose fibers, both from hardwood or softwood fibers. It can also be made from microbial sources, agricultural fibers such as wheat straw pulp, bamboo, bagasse, or other non-wood fiber sources. It is preferably made from pulp including pulp from virgin fiber, e.g. mechanical, chemical and/or chemithermomechanical pulps. It can also be made from broke or recycled paper.

The above described definition of MFC includes, but is not limited to, the new proposed TAPPI standard W13021 on cellulose nanofibril (CNF) defining a cellulose nanofiber material containing multiple elementary fibrils with both crystalline and amorphous regions, having a high aspect ratio with width of 5-30nm and aspect ratio usually greater than 50.

The 3D articles formed by the method of the invention are composed by one (or several) layer(s) with a pre-determined thickness, which thickness is substantially the same in all directions of the layer's extension. Said layer has a first and a second side. The 3D shape of the article is formed such that a depression in the first side of the layer (or layers) corresponds to a protrusion in the corresponding second side of the layer.

As described herein, it has surprisingly been found that it is possible to form a fiber-based, 3D article, by spraying a fiber suspension on a smooth form and thereby achieve a 3D article with a smooth and substantially crease-free surface. It has been assumed in the art that some kind of dewatering through the mold, e.g. by use of vacuum, is needed to attach a fiber suspension to the mold. However, the use of a suspension comprising a considerably high amount of short fibers enhances the affinity of the fibers to the mold. The spraying of said suspension onto the mold increases the production efficiency and gives rise to an even and smooth application of the fibers onto the mold.

The fiber suspension to be sprayed on the mold is preferably an aqueous suspension (or slurry). The suspension is prepared by dispersion fibers in an aqueous media. The suspension comprises at least 95w% of cellulose fibers, calculated on the total amount of dry material in the suspension, whereof at least 50w% of said cellulose fibers have a fiber length of less than 1 mm. The remaining part of the cellulose fibers may be longer fibers of hardwood and/or softwood. The cellulose fibers (both the shorter and the longer fraction) may be softwood and/or hardwood e.g. from pine, spruce, birches, eucalyptus, oaks, beeches or poplars and combination of any of these. In addition to the fibers, the suspension may comprise additives, such as binders, pigments and/or dies, which additive can be added to the aqueous media before or after the addition of the fibers.

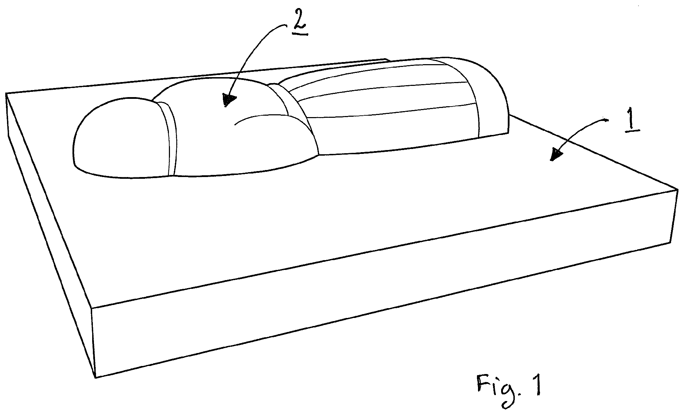

The mold is preferably a male-formed mold having a convex form, which could include smooth or sharp curves. The skilled person realizes that the mentioned convex form could be any kind of form, e.g. rectangular, crescent-shaped, triangular, astral, uniform or irregular etc. The outer surface of the mold, which is to be sprayed with the fiber suspension, is smooth and non-permeable, preferably having a surface roughness of below 2 µm Ra, or preferably below 1 µm Ra. One example of a mold is shown in fig. 1. The mold shown in fig. 1 has a substantially flat base surface 1, and a curved, convex protrusion 2.

The mold is heated and may be of e.g. aluminum, stainless steel, steel or cast iron. The mold may be heated to a temperature of around 100 - 200 C°, by use of e.g. contact heating, direct heating, induction heating, by circulating heating liquid in channels in the mold or other heating methods well known to the skilled person. The mold may be pre-heated or continuously heated. Optimally, the mold is held at a temperature of between 100 - 200 °C, preferably between 100 - 130 °C, during the spraying operation. In accordance with one preferred embodiment of the invention, the fiber suspension is sprayed on the mold in several steps, with in-between drying by use of e.g. hot air, infrared radiation (IR) or microwaves. The spraying may be done by use of any spraying technology known to the skilled person, e.g. by use of air-less or air-assisted spraying technology. The fiber suspension is applied on the mold in an amount forming subsequent layers of fiber material, each layer having a grammage of around 5 - 10 gsm. After the final layer has been applied, the article is dried to a dry content of around 95w%. The article formed thereby may be pulled off the mold. Alternatively, the article is dried to a dry content of around 50 - 95 w%, pulled off the mold and further dried to a dry content of at least 95w%. The thereby formed article shows excellent smoothness on both the surface which has been in contact with the mold and the opposite surface, due to the combination of the smooth mold, the application method and the short fiber length of the cellulose fibers.

The invention is further described by way of an example below.

### Example 1:

An aqueous suspension comprising cellulose fibers from softwood kraft pulp is prepared which fibers have been refined and cut to a fiber length of less than 0,8 mm. The suspension is formed by slurring the refined fibers in water forming an aqueous suspension with a dry content of around 12%. Said suspension is sprayed on a mold similar to the one shown in fig. 1, which mold is pre-heated to a temperature of around 100 °C. The suspension is sprayed on the mold in an amount to form a first fiber layer with a grammage of around 20 gsm. Thereafter, the formed fiber layer is dried on the mold using hot air to a dry content of around 50 %. A second fiber layer is thereafter sprayed onto the dried first fiber layer, said second fiber layer having a grammage of around 20 gsm. Said first and second fiber layers are thereafter dried on the mold. Subsequent third, fourth, fifth... up to 30 layers are sprayed onto said first layers, with intermediate hot-air drying, forming an article having the same 3D shape as the mold. The article is pulled off the mold and a 3D shaped article showing smooth, crease-free surfaces is obtained.

## Claims

1. A method of manufacturing a 3D shaped article from cellulose fiber based material comprising the steps of:
- providing a suspension with a dry content of more than 10%, which suspension comprises at least 95w% of cellulose fibers calculated on the total amount of dry material, whereof at least 50w% of said cellulose fibers have a fiber length of less than 1 mm and are nanofibrillated polysaccharide,
- spraying, in at least a first and a second spraying step, said suspension on a 3D-shaped, heated mold, which mold is held at a temperature of between 100 - 200 °C during the spraying operation and which mold has a smooth surface, whereby a 3D shaped article of cellulose fiber based material is formed, drying said 3D shaped article,
the method further comprising a step of drying the formed article in-between said first and second spraying.

2. A method according to claim 1, wherein the drying of the 3D shaped article is performed by use of hot air, IR or microwaves.

3. The method of any one of the above claims, wherein the suspension has a dry content of at least 15 %, preferably between 15 - 30%, most preferably between 15 - 25%.

4. A method according to anyone of the above claims, wherein the 3D-shaped, heated mold is male-formed.

5. A method according to anyone of the above claims, wherein the article formed after the first spraying step is dried to a dry content of at least 50%, preferably to between 50-70%, prior to the second spraying step.

6. A method according to anyone of the above claims, wherein the suspension is sprayed on the mold in at least three steps with in-between drying between the steps.

## Patentansprüche

1. Verfahren zum Herstellen eines 3D-Formgegenstandes aus Material, das auf Zellulosefasern basiert, umfassend die Schritte:
- Bereitstellen einer Suspension mit einem Trockengehalt von mehr als 10 %, wobei die Suspension mindestens 95 Gew.-% Zellulosefasern, berechnet auf die Gesamtmenge des Trockenmaterials, umfasst, wovon mindestens 50 Gew.-% der Zellulosefasern eine Faserlänge von weniger als 1 mm aufweisen und nanofibrilliertes Polysaccharid sind,
- Sprühen, in mindestens einem ersten und einem zweiten Sprühschritt, der Suspension auf ein 3D-förmiges erwärmtes Formwerkzeug, wobei das Formwerkzeug während des Sprühvorgangs bei einer Temperatur zwischen 100 und 200 °C gehalten wird und wobei das Formwerkzeug eine glatte Oberfläche aufweist, wodurch ein 3D-Formgegenstand aus einem Material, das auf Zellulosefasern basiert, gebildet wird, Trocknen des 3D-Formgegenstandes,
wobei das Verfahren ferner einen Schritt des Trocknens des geformten Gegenstandes zwischen dem ersten und dem zweiten Besprühen umfasst.

2. Verfahren nach Anspruch 1, wobei das Trocknen des 3D-Formgegenstandes durch Verwenden von Heißluft, IR oder Mikrowellen durchgeführt wird.

3. Verfahren nach einem der obigen Ansprüche, wobei die Suspension einen Trockengehalt von mindestens 15 %, bevorzugt zwischen 15 und 30 %, am meisten bevorzugt zwischen 15 und 25 %, aufweist.

4. Verfahren nach einem der obigen Ansprüche, wobei das 3D-förmige erwärmte Formwerkzeug patrizenförmig ist.

5. Verfahren nach einem der obigen Ansprüche, wobei der Gegenstand, der nach dem ersten Sprühschritt gebildet ist, vor dem zweiten Sprühschritt auf einen Trockengehalt von mindestens 50 %, bevorzugt zwischen 50 und 70 %, getrocknet wird.

6. Verfahren nach einem der obigen Ansprüche, wobei die Suspension in mindestens drei Schritten auf das Formwerkzeug mit dazwischengeschaltetem Trocknen zwischen den Schritten gesprüht wird.

## Revendications

1. Procédé de fabrication d'un article en forme 3D à partir de matériau à base de fibres de cellulose, comprenant les étapes consistant à :
- fournir une suspension avec une teneur en matière sèche de plus de 10 %, ladite suspension comprenant au moins 95 % en poids de fibres de cellulose calculés sur la quantité totale de matière sèche, au moins 50 % en poids desdites fibres de cellulose ayant une longueur de fibre inférieure à 1 mm et étant un polysaccharide nanofibrillé,
- pulvériser, en au moins une première et une deuxième étape de pulvérisation, ladite suspension sur un moule chauffé en forme 3D, ledit moule étant maintenu à une température comprise entre 100 et 200 °C pendant l'opération de pulvérisation et ledit moule ayant une surface lisse, moyennant quoi un article en forme 3D de matériau à base de fibres de cellulose est formé, en séchant ledit article en forme 3D,
le procédé comprenant en outre une étape de séchage de l'article formé entre lesdites première et deuxième pulvérisations.

2. Procédé selon la revendication 1, dans lequel le séchage de l'article en forme 3D est réalisé en utilisant de l'air chaud, l'infrarouge ou des micro-ondes.

3. Procédé selon l'une quelconque des revendications précédentes, dans lequel la suspension a une teneur en matière sèche d'au moins 15 %, de préférence comprise entre 15 et 30 %, le plus préférablement comprise entre 15 et 25 %.

4. Procédé selon l'une quelconque des revendications précédentes, dans lequel le moule chauffé en forme 3D a une forme mâle.

5. Procédé selon l'une quelconque des revendications précédentes, dans lequel l'article formé après la première étape de pulvérisation est séché jusqu'à une teneur en matière sèche d'au moins 50 %, de préférence comprise entre 50 et 70 %, avant la deuxième étape de pulvérisation.

6. Procédé selon l'une quelconque des revendications précédentes, dans lequel la suspension est pulvérisée sur le moule en au moins trois étapes avec un séchage entre les étapes.
